# EUROPÄISCHE PATENTSCHRIFT

(11) **EP 3 479 674 B1**
(45) Veröffentlichungstag und Bekanntmachung des Hinweises auf die Patenterteilung: **10.03.2021**
(21) Anmeldenummer: 18000856.7
(22) Anmeldetag: 01.11.2018
(51) Int. Cl.: A01D 89/00, A01D 69/06, A01D 69/08, A01F 29/14, A01D 75/18

(54) **LANDWIRTSCHAFTLICHE ERNTEMASCHINE**
AGRICULTURAL HARVESTER
MOISSONNEUSE AGRICOLE

(30) Priorität: 06.11.2017 DE 102017010230
(43) Veröffentlichungstag der Anmeldung: 08.05.2019
(73) Patentinhaber: Maschinenfabrik Bernard Krone GmbH & Co. KG, 48480 Spelle (DE)
(72) Erfinder: Meiners, Michael, 49832 Beesten (DE)

(56) Entgegenhaltungen:
- EP-A1- 1 338 191
- EP-A1- 1 864 567
- EP-A1- 2 636 297
- EP-A1- 2 995 190
- EP-A2- 2 781 149

## Beschreibung

Das Patent betrifft eine landwirtschaftliche Erntemaschine mit einem Ernteaggregat und einem von wenigstens einem Antriebsstrang der Erntemaschine abgezweigten und das Ernteaggregat antreibenden Nebenantriebsstrang. Der Nebenantriebsstrang umfasst einen Riementrieb, der zumindest eine Antriebsriemenscheibe und zumindest eine Abtriebsriemenscheibe sowie einen Riemen umfasst. Weiterhin ist der Riementrieb mit einer Überlastsicherung versehen, welche eine Spannvorrichtung zum Spannen des Riemens sowie eine die Spannvorrichtung steuernde Steuerungseinrichtung mit einer Vorrichtung zur Schlupferkennung aufweist.

Derartige landwirtschaftliche Erntemaschinen sind aus dem Stand der Technik bekannt. Beispielsweise weisen Quaderballenpressen einen vom Antrieb eines Presskolbens abgezweigten Nebenantriebsstrang auf, durch den ein Ernteaggregat mit einer Schneid- und Fördereinrichtung angetrieben wird. Wenn im Nebenantriebsstrang ein Drehmoment auf das Ernteaggregat übertragen wird, kommt es im Riementrieb zu Schlupf, d. h. die Umfangsgeschwindigkeiten der Antriebs- und Abtriebsriemenscheiben beginnen sich zu unterscheiden. Der Schlupf ist proportional zur Dehnung des Riemens und nahezu proportional zu dem übertragenden Drehmoment. Durch die Vorrichtung zur Schlupferkennung der Steuerungseinrichtung kann das durch den Riemen übertragene Drehmoment bestimmt werden und bei Überschreiten eines vorgebbaren maximalen Drehmomentes kann der Riemen durch eine Überlastsicherung entspannt werden. Hierzu steuert die Steuerungseinrichtung die Spannvorrichtung derart an, dass es zum Entspannen des Riemens kommt. Andernfalls kann es ab einem bestimmten Drehmoment zur Überlastung und damit zu einem Durchrutschen des Riemens kommen. Hierbei besteht die Gefahr einer Beschädigung des Riemens durch den dann erhöhten Riemenverschleiß. Andererseits kann somit ein Riementrieb selber eine Überlast verhindernde Funktion aufweisen, bei der ein Durchrutschen des Riemens die Beschädigung weiterer Teile der landwirtschaftlichen Erntemaschine vermeidet unter Inkaufnahme von erhöhtem Verschleiß des Riemens. Durch die Verwendung der dezidierten Überlastsicherung wird dieser Betriebszustand jedoch weitestgehend vermieden.

Die Druckschrift EP 2 995 190 A1 offenbart ein Verfahren zum Betreiben eines Mähdreschers, bei dem Arbeitsaggregate hinsichtlich eines Auftretens von Schlupf an einem Riementrieb sensorisch überwacht werden. Das Verfahren sieht vor, dass die Schlupf repräsentierenden Signale von der Steuerungseinrichtung ausgewertet und das Ergebnis gewichtet wird, dass in Abhängigkeit von der Gewichtung des Ergebnisses zumindest eine Maßnahme von der Steuerungseinrichtung eingeleitet wird, die zu einer Reduzierung des Schlupfes führt, und dass die zumindest eine eingeleitete Maßnahme durch eine Ein- und Ausgabeeinheit signalisiert wird.

Nachteilig am Stand der Technik ist das Ansprechverhalten der Überlastsicherung. Die Regelstrecke, umfassend die Vorrichtung zur Schlupferkennung, die Steuereinrichtung sowie die Spannvorrichtung zum Spannen des Riemens, benötigt eine gewisse Zeit, bis Antriebs- und Abtriebsriemenscheibe voneinander entkoppelt werden können. In der Zwischenzeit kann es zu Beschädigungen von Maschinenteilen bzw. des Riemens kommen.

In der Folge müssten vor der Weiterverwendung der landwirtschaftlichen Erntemaschine die beschädigten Bauteile bzw. der beschädigte Riemen ausgetauscht werden.

Aufgabe der vorliegenden Erfindung ist es, eine landwirtschaftliche Erntemaschine der eingangs genannten Art mit hoher Verfügbarkeit und kurzen Stillstandszeiten bereitzustellen, die zuverlässiger und langlebiger gestaltet ist und die oben genannten Nachteile vermeidet.

Dafür wird eine landwirtschaftliche Erntemaschine mit den Merkmalen des Anspruchs 1 geschaffen, bei der der Nebenantriebsstrang eine weitere, das Ernteaggregat bei Überschreiten eines vorgebbaren maximalen Drehmoments vom Antriebsstrang mechanisch trennende Überlastsicherung aufweist. Die weitere Überlastsicherung löst bei einem bestimmten maximalen Drehmoment aus. Hierdurch wird eine Beschädigung der Maschine bzw. des Riementriebs des Nebenantriebsstrangs vermieden, wenn es zu einem plötzlich eintretenden Anstieg des Drehmomentes kommt. Hierbei kann, wie oben beschrieben, die Überlastsicherung des Riementriebes nicht ausreichend schnell eine Entkopplung des Ernteaggregates vom Antriebsstrang bewirken, um Schäden an der Maschine zu vermeiden.

Damit ist bei plötzlich auftretenden Überlasten im Nebenantriebsstrang sichergestellt, dass solche Überlasten nicht zu Maschinenschäden führen. Beispielsweise können landwirtschaftliche Ballenpressen hergestellt werden, die einen Messerblock mit einer von der üblichen Messeranzahl von 26 Messern auf 51 Messer nahezu verdoppelte Messeranzahl aufweisen. Mit dieser Verdopplung der Anzahl an Messern im Messerblock ist zu erreichen, dass besonders kurz geschnittenes Erntegut in den von der Ballenpresse gepressten und gebundenen Ballen verarbeitet werden kann. Hierdurch kann das Erntegut nach Auflösen eines Ballens direkt als Futtermittel verwendet werden. Bei der Verwendung von 26 Messern im Messerblock ist die Faserlänge für die Verwendung als Futtermittel länger als gewünscht, so dass nach Auflösen eines Ballens häufig noch ein Zerkleinern der Fasern als Zwischenschritt erfolgt. Dieser Zwischenschritt kann beispielsweise in einem Futtermischwagen stattfinden. Durch die Verwendung einer Ballenpresse mit 51 Messern im Messerblock kann die Zerkleinerung der Fasern nach Auflösen des Ballens entfallen. Sollte sich dabei ein plötzlicher Stau im Erntegut einstellen, kann darauf mit der zusätzlichen zweiten Überlastsicherung direkt reagiert werden.

Die Verdopplung der Messeranzahl im Messerblock bewirkt einen deutlichen Anstieg der Leistungsaufnahme des Ernteaggregates, insbesondere des Schneid- und Förderrotors des Ernteaggregates der Ballenpresse. Der Nebenantriebsstrang zum Antrieb des Schneid- und Förderrotors muss somit für höhere Leistungen ausgelegt werden.

Zudem versuchen die Anwender der landwirtschaftlichen Erntemaschine, hier der Ballenpresse, beim Ernten aus ökonomischen Gründen einen möglichst hohen Erntegutdurchsatz zu erzielen. Hierdurch wird das Ernteaggregat nahe seiner Auslegungsleistungsgrenze betrieben. Ein Überschreiten dieser Auslegungsleistungsgrenze kann durch die Überlastsicherung des Riementriebes verhindert werden. Die Steuerungseinrichtung mit der Vorrichtung zur Schlupferkennung kann das im Riementrieb übertragene Drehmoment feststellen. Bei Überschreiten des maximal zulässigen Drehmomentes bzw. beim Überschreiten eines bestimmten Schlupfes wird der Riemen entspannt und Antriebs- und Abtriebsriemenscheibe voneinander entkoppelt. Der Bediener der landwirtschaftlichen Erntemaschine bekommt somit eine Rückmeldung, dass er im Betrieb die Belastungsgrenze der landwirtschaftlichen Erntemaschine überschritten hat. Wenn er nun den Erntegutdurchsatz reduziert, können die Antriebs- und Abtriebsriemenscheibe über den Riemen bzw. die Spannvorrichtung des Riemens wieder eingekoppelt und der Erntevorgang kann fortgesetzt werden.

Wenn die Erhöhung des Drehmomentes im Ernteaggregat jedoch nicht durch einen graduellen Anstieg des Erntegutdurchsatzes bis über die Leistungsgrenze hinaus erfolgt, sondern durch plötzlich in das Ernteaggregat eingebrachte Fremdkörper wie Steine oder durch unerwartet auftretende Verstopfungen und/oder Agglomerationen von Erntegut, wie z. B. Klumpen von feuchtem Erntegut, auftritt, ist die Überlastsicherung des Riementriebes mit der entsprechenden Spannvorrichtung, der Steuerungseinrichtung sowie der Vorrichtung zur Schlupferkennung zu langsam, um die Antriebs- und Abtriebsriemenscheibe ausreichend schnell voneinander zu entkoppeln, bevor es zu Schäden des Ernteaggregates, im Nebenantriebsstrang, im Antriebsstrang oder an anderen Teilen der landwirtschaftlichen Erntemaschine kommt.

Dies kann bei unterschiedlichen landwirtschaftlichen Erntemaschinen realisiert werden, neben den erwähnten Ballenpressen z.B. auch bei selbstfahrenden Großflächenmähern. Hier könnte erfindungsgemäß ein vom Fahrantrieb abzweigender Nebenantriebsstrang ein oder mehrere Ernteaggregate in Form von Mähwerken antreiben. Die Erntemaschinen kann jedoch auch mehrere Ernteaggregate beispielsweise in Form von Mähwerken sowie mehrere die Ernteaggregate antreibenden Nebenantriebsstränge aufweisen.

Diese Gefahr einer Beschädigung der landwirtschaftlichen Erntemaschine ist dadurch verstärkt, dass die Leistungsaufnahme des Ernteaggregates der landwirtschaftlichen Erntemaschine wie der oben geschilderten Ballenpresse gegenüber den bisher bekannten landwirtschaftlichen Erntemaschinen deutlich gestiegen ist. Die übertragenen Drehmomente und Kräfte sind dabei so groß, dass die geschilderten Beschädigungen der landwirtschaftlichen Erntemaschine drohen.

Der Erfindung liegt somit die Erkenntnis zugrunde, dass dem langsamen Ansprechverhalten der Überlastsicherung des Riementriebs, die bei plötzlich, wie sie beispielsweise durch Fremdkörper im Ernteaggregat auftreten, auftretenden Belastungen und daraus folgenden Drehmomentanstiegen resultierenden möglichen Beschädigung der landwirtschaftlichen Erntemaschine durch das Vorsehen einer weiteren, das Ernteaggregat bei Überschreitung eines vorgebbaren maximalen Drehmomentes mechanisch vom Antriebsstrang trennende Überlastsicherung Rechnung getragen werden kann.

Bevorzugt umfasst die Vorrichtung zur Schlupferkennung eine die Drehzahl der Antriebsriemenscheibe ermittelnde Erfassungseinheit und eine die Drehzahl der Abtriebsriemenscheibe ermittelnde Erfassungseinheit. Diese Erfassungseinheiten können dabei direkt die Drehzahlen der jeweiligen Riemenscheibe erfassend ausgestaltet sein. Sie können die Drehzahl der Riemenscheibe jedoch auch indirekt erfassen, indem sie die Drehzahl von anderen, in einem festen Übersetzungsverhältnis mit der jeweiligen Riemenscheibe stehenden Getriebeelementen, wie z. B. einem Stirnrad in einer Stirnradverzahnung, erfassen. Hierdurch kann der Schlupf des Riemens durch die Veränderung der Drehzahlen der Antriebsriemenscheibe und Abtriebsriemenscheibe erkannt werden. Dabei kann entweder von der Differenz der Drehzahlen oder vom Verhältnis der Drehzahlen ausgegangen werden. Das Verhältnis der Drehzahlen von Antriebsriemenscheibe und Abtriebsriemenscheibe entspricht dem Übersetzungsverhältnis des Riementriebs. Das tatsächliche Übersetzungsverhältnis kann hierbei mit dem Übersetzungsverhältnis, bestimmt durch das Verhältnis der Durchmesser von Antriebs- und Abtriebsriemenscheibe, verglichen werden. Somit ist eine zuverlässige Schlupferkennung möglich. Dies erhöht die Lebensdauer und Zuverlässigkeit der landwirtschaftlichen Erntemaschine.

Vorzugsweise ist die Steuerungseinrichtung dazu eingerichtet, einen das Ernteaggregat vom Antriebsstrang trennenden Schaltvorgang der Spannvorrichtung auszulösen, wenn der von der Vorrichtung zur Schlupferkennung ermittelte Schlupf während einer vordefinierten Zeitspanne einen zweiten vordefinierten Wert überschreitet. Hierbei kann die Zeitspanne beispielsweise eine Sekunde betragen, während der vordefinierte Wert des Schlupfes, beispielsweise definiert als prozentuale Abweichung der als Drehzahlverhältnis der Drehzahl von Antriebsriemenscheibe zu Abtriebsriemenscheibe bestimmten momentanen Übersetzung zur nominalen Übersetzung, beispielsweise 10 % betragen kann.

Eine derartige landwirtschaftliche Erntemaschine lässt ein Herantasten an den maximal möglichen Erntegutdurchsatz zu. Das kann bei unterschiedlichen Erntemaschinen realisiert werden, nicht nur bei Pressen, sondern z. B. auch bei selbstfahrenden Großflächenmähern. So kann beispielsweise dem Anwender der landwirtschaftlichen Erntemaschine über ein optisches Anzeigegerät der derzeit gemessene Schlupf angezeigt werden. Diese Anzeige kann beispielsweise durch ein farbliches Schema nach Art einer Ampel unterstützt sein. Hierbei ist eine Verwendung der landwirtschaftlichen Erntemaschine in einem grünen Bereich unkritisch, wobei sie in einem orangen Bereich im Bereich der Leistungsgrenze betrieben wird und ein roter Bereich ein momentanes Überschreiten der Leistungsgrenze anzeigt. Dieses Überschreiten der Leistungsgrenze hätte über die gewisse vordefinierte Zeitspanne von beispielsweise einer Sekunde die Folge, dass die Steuerungseinrichtung einen das Ernteaggregat vom Antriebsstrang trennenden Schaltvorgang der Spannvorrichtung auslösen würde. Eine Überlastung der landwirtschaftlichen Erntemaschine wird somit verhindert. Dies hat eine robuste, langlebige und zuverlässige landwirtschaftliche Erntemaschine zur Folge.

Besonders bevorzugt entspricht der zweite vordefinierte Wert für den ermittelten Schlupf einem Wert, der bei einem übertragenen Drehmoment in einer vordefinierten Zeitspanne nicht schädigend auf den Antriebsstrang und/oder den Nebenantriebsstrang einwirkt. Somit kann sichergestellt werden, dass die Steuerungseinrichtung einen das Ernteaggregat vom Antriebsstrang trennenden Schaltvorgang auslöst, bevor es zu einer Schädigung des Antriebsstrangs oder des Nebenantriebsstrangs durch das übertragene Drehmoment während dieser vorgebbaren vordefinierten Zeitspanne kommen kann. Hierdurch wird die Lebensdauer und Zuverlässigkeit der landwirtschaftlichen Erntemaschine erhöht.

Besonders bevorzugt entsteht der zweite vordefinierte Wert des Schlupfes des Riementriebes bei einem Drehmoment an der weiteren Überlastsicherung, das unterhalb des vorgebbaren maximalen Drehmoments liegt. Das maximale Drehmoment ist dabei das Drehmoment, bei dessen Überschreiten die weitere Überlastsicherung das Ernteaggregat vom Antriebsstrang mechanisch trennt. Das maximale Drehmoment wiederum liegt unterhalb des Drehmomentes an der weiteren Überlastsicherung, bei dem mit Schädigungen von weiteren Bauelementen der landwirtschaftlichen Erntemaschine, insbesondere des Ernteaggregates, des Antriebsstrangs oder des Nebenantriebsstrangs zu rechnen ist. Es ergeben sich somit zwei Schaltbereiche für die Überlastsicherungen der landwirtschaftlichen Erntemaschine.

Bei Drehmomenten, die über eine längere Zeit die Auslegungsdrehmomente des Ernteaggregates überschreiten, registriert die Vorrichtung zur Schlupferkennung einen erhöhten Schlupf zwischen Antriebs- und Abtriebsriemenscheibe über diese Zeitspanne, und die Steuerungseinrichtung löst eine Trennung von Antriebs- und Abtriebsriemenscheibe darüber aus, dass der Riemenspanner den Riemen entspannt. Die hohen Drehmomente treten hierbei typischerweise dadurch auf, dass ein Anwender der landwirtschaftlichen Erntemaschine den maximalen Erntegutdurchsatz zu überschreiten versucht.

Bei dem Auftreten eines sehr hohen Drehmomentes, wie es beispielsweise plötzlich durch das Einziehen eines Fremdkörpers oder von Verstopfungen in das Ernteaggregat auftreten kann, wird das Ernteaggregat über die weitere Überlastsicherung mechanisch vom Antriebsstrang getrennt. Diese mechanisch trennende Überlastsicherung ist hierbei so ausgeführt, dass sie sehr schnell auf eine Überschreitung des maximalen Drehmomentes durch ein sehr hohes Drehmoment reagiert und eine Trennung von Ernteaggregat und Antriebsstrang bewirkt. Da das maximale Drehmoment unterhalb des Drehmomentbereiches liegt, in dem mit Schädigungen weiterer Teile der landwirtschaftlichen Erntemaschine zu rechnen ist, wird hierdurch eine zuverlässige und langlebige landwirtschaftliche Erntemaschine bereitgestellt.

Erfindungsgemäß ist die Steuerungseinrichtung der landwirtschaftlichen Erntemaschine dazu eingerichtet, einen das Ernteaggregat vom Antriebsstrang trennenden Schaltvorgang der mechanisch trennenden weiteren Überlastsicherung zu erkennen, wenn der von der Vorrichtung zur Schlupferkennung ermittelte Schlupf einen ersten vordefinierten Wert überschreitet. Die Steuerungseinrichtung kann dann z. B. einen Hinweis an den Anwender der landwirtschaftlichen Erntemaschine ausgeben darüber, dass ein Schaltvorgang der weiteren Überlastsicherung festgestellt wurde. Weiterhin kann die Steuerungseinrichtung daraufhin beispielsweise einen das Ernteaggregat vom Antriebsstrang trennenden Schaltvorgang der Spannvorrichtung auslösen. Hierdurch wird der bisher durch den Riementrieb festgelegte Teil der weiteren Überlastsicherung freigegeben. Dieser kann ggf. wieder beginnen zu rotieren, was ggf. die Belastung auf die weitere Überlastsicherung verringern und somit die Lebensdauer und Verfügbarkeit der landwirtschaftlichen Erntemaschine erhöhen kann.

Besonders bevorzugt entspricht der erste vordefinierte Wert für den ermittelten Schlupf einem Wert, der sich bei sofortiger Trennung der mechanisch trennenden welteren Überlastsicherung einstellt. Hierdurch ist sichergesteilt, dass die Steuerungseinrichtung einen Schaltvorgang der weiteren Überlastsicherung zuverlässig erkennt. Hierdurch wird die Zuverlässigkeit, Lebensdauer und Verfügbarkeit der landwirtschaftlichen Erntemaschine erhöht.

Mit Vorteil ist die Spannvorrichtung über einen Hydraulikzylinder betätigbar. In landwirtschaftlichen Erntemaschinen ist die Verwendung von hydraulischen Stellelementen üblich. Die Hydraulikflüssigkeit kann von handelsüblichen landwirtschaftlichen Zugmaschinen bereitgestellt werden. Durch die Verwendung einer über einen Hydraulikzylinder betätigbaren Spannvorrichtung kann auf einfache Weise eine zuverlässige Betätigung der Spannvorrichtung sichergestellt sein. Weiterhin kann der Hydraulikzylinder in einer Form ausgestaltet sein, dass es beim Druckabfall innerhalb der Hydraulik, beispielsweise durch einen Defekt in dem Hydrauliksystem oder einen Ausfall der Zugmaschine, zu einem die Antriebsriemenscheibe von der Abtriebsriemenscheibe trennenden Schaltvorgang der Spannvorrichtung kommt. Schäden an der landwirtschaftlichen Erntemaschine werden sicher vermieden. Hierdurch wird auf kostengünstige und einfache Weise eine sichere und zuverlässige landwirtschaftliche Erntemaschine bereitgestellt.

Bevorzugt Ist die weitere Überlastsicherung als Überlastkupplung ausgestaltet. In der Ausgestaltung als Überlastkupplung kann die weitere Überlastsicherung nach einem Auslösen durch Überschreiten eines vorgebbaren maximalen Drehmomentes wieder eingekuppelt werden. Damit steht die landwirtschaftliche Erntemaschine zeitnah wieder zur Verfügung. Ein Wechsel von Bauteilen ist in dieser Ausführungsvariante nicht notwendig. Somit wird eine zuverlässige und hochverfügbare landwirtschaftliche Erntemaschine zur Verfügung gestellt. Weiterhin ist es bei Überlastkupplungen möglich, das maximale Drehmoment einfach einzustellen.

Besonders bevorzugt ist die Überlastkupplung als Nockenschaltkupplung ausgestaltet. Nockenschaltkupplungen sind im Bereich landwirtschaftlicher Maschinen weit verbreitet und zeichnen sich durch ihre hohe Robustheit und Zuverlässigkeit aus. Weiterhin können bei Nockenschaltkupplungen durch die Vorspannung der die Nocken mit einer Kraft beaufschlagenden Federn das maximale Drehmoment auf besonders einfache Welse vorgegeben werden. Somit wird durch die Verwendung einer Nockenschaltkupplung als Überlastkupplung im Rahmen der weiteren Überlastsicherung eine besonders zuverlässige und hochverfügbare landwirtschaftliche Erntemaschine bereitgestellt.

Vorzugsweise ist die Überlastkupplung nach einem Auslösen über den Riementrieb wieder einkuppelbar. Hierdurch wird es möglich, dass der Bediener der landwirtschaftlichen Erntemaschine eine Fahrerkabine nicht verlassen muss, um die Kupplung wieder einzukuppeln. Hierdurch wird eine zuverlässige und hochverfügbare landwirtschaftliche Erntemaschine bereitgestellt. Das Einkuppeln einer ausgekuppelten Überlast-Kupplung ist hierbei zunächst einmal ein Problem. Wenn der Riementrieb gespannt bleibt, ist ein Teil der Überlast-Kupplung stehend, während der andere Teil der Überlast-Kupplung durch den Antrieb weiter angetrieben wird und sich dreht. In diesem Zustand ist ein Einkuppeln nicht möglich. Daher wird über den Riemenspanner die Spannung des Riemens reduziert, so dass die Antriebs- und Abtriebsriemenscheibe ausgekuppelt werden. Der stehende Teil der Überlast-Kupplung wird dann durch Reibung durch den bewegten Teil der Überlast-Kupplung beschleunigt, wobei beide Teile sich schlussendlich mit der gleichen Drehzahl bewegen. Wenn die Überlast-Kupplung ausgekuppelt ist, kann es dazu kommen, dass sich die beiden mit gleicher Drehzahl bewegenden Teile der Überlast-Kupplung nicht in einer Position befinden, in der die Überlast-Kupplung eingekuppelt werden kann.

Um ein Einkuppeln der Überlast-Kupplung zu erreichen, kann der Riementrieb verwendet werden. Entweder kann die Spannung des Riementriebs graduell weggenommen werden, so dass durch den Widerstand des Riementriebs es einerseits zu einer Bewegung des bisher stehenden Teils der Überlast-Kupplung kommt, gleichzeitig der Riementrieb jedoch einen Widerstand auf den zuvor stehenden Teil der Überlast-Kupplung ausübt. Hierdurch werden die beiden Teile der Überlast-Kupplung relativ zueinander bewegt, bis diese in eine Kupplungsposition gelangen, In der die Überlast-Kupplung wieder einkuppeln kann. Ein derartiges Einkuppeln der Überlastkupplung durch den Riementrieb ist auch durch ein graduelles Spannen des Riemens des Riementriebs beim Wiedereinkuppeln von Antriebs- und Abtriebsriemenscheibe denkbar. Hierdurch wird beim Kuppeln langsam ein Widerstand auf den mitdrehenden Teil der Überlastkupplung ausgeübt, so dass es zu einer Relativbewegung der beiden drehenden Telle der Überlastkupplung kommt, bis diese sich in einer Kupplungsposition gegenüberstehen und die Überlast-Kupplung wieder einkuppeln kann. Anschließend kann der Riementrieb wieder weiter gespannt werden, bis er die Betriebsspannung erreicht hat und die landwirtschaftliche Erntemaschine wieder den Betrieb aufnimmt.

Bevorzugt ist der Nebenantriebsstrang die Drehzahl vom Antriebsstrang zum Ernteaggregat verringernd ausgestaltet. Die Drehzahl am Ernteaggregat ist typischerweise geringer als die Drehzahl im Antriebsstrang bzw. am Eingang des Nebenantriebsstranges. Weiterhin kann durch eine Verringerung der Drehzahl das Drehmoment am Ernteaggregat erhöht werden. Dies erhöht die Leistungsfähigkeit der landwirtschaftlichen Erntemaschine.

Vorzugsweise umfasst der Nebenantriebsstrang eine die Drehzahl an der weiteren Überlastsicherung erhöhende Getriebeanordnung. Dadurch, dass an der weiteren Überlastsicherung die Drehzahl erhöht wird, sinkt das Drehmoment, das durch die weitere Überlastsicherung abgesichert werden muss. Hierdurch kann die weitere Überlastsicherung kleiner und leichter ausfallen. Die weitere Überlastsicherung selber kann somit kostengünstig ausgeführt werden. Zudem ist die weitere Überlastsicherung bei Schaltvorgängen geringeren Drehmomenten ausgesetzt. Hierdurch wird die Lebensdauer und Zuverlässigkeit der landwirtschaftlichen Erntemaschine erhöht.

Besonders bevorzugt beträgt die Drehzahl an der weiteren Überlastsicherung mindestens 1000 U/min. Übliche Drehzahlen im Eingang des Nebenantriebsstranges sind in der Größenordnung von 200 bis 300 U/min, während die Drehzahl am Ernteaggregat typischerweise zwischen 100 und 200 U/min liegt. Bei einer Erhöhung der Drehzahl auf 1000 U/min und höher an der Überlastsicherung werden somit abzusichernde Drehmomente auf ein Drittel bis zu ein Zehntel des andernfalls abzusichernden Drehmoments verringert. Hierdurch kann die weitere Überlastsicherung deutlich leichter und kostengünstiger ausgeführt werden. Außerdem ist die weitere Überlastsicherung generell geringeren Belastungen ausgesetzt, was die Zuverlässigkeit und Langlebigkeit der landwirtschaftlichen Erntemaschine verbessert.

Bevorzugt umfasst das Ernteaggregat einen Förder- und Schneidrotor. Landwirtschaftliche Erntemaschinen mit einem Förder- und Schneidrotor weisen einen hohen Leistungsbedarf des Förder- und Schneidrotors auf. Hierbei handelt es sich um landwirtschaftliche Erntemaschinen wie Ladewagen oder Ballenpressen, Rundballenpressen oder Quaderballenpressen. Durch die kombinierte Funktion des Förderns und Schneidens des Erntegutes ist die Leistungsaufnahme eines Ernteaggregats mit einem Förder- und Schneidrotor besonders hoch. In diesem Szenario ist die Verwendung eines Nebenantriebsstranges mit einer weiteren, das Ernteaggregat bei Überschreiten eines vorgebbaren maximalen Drehmoments vom Antriebsstrang mechanisch trennenden Überlastsicherung neben einer Überlastsicherung eines Riementriebes besonders vorteilhaft, um eine zuverlässige, langlebige landwirtschaftliche Erntemaschine mit hoher Verfügbarkeit zu erhalten.

Vorzugsweise Ist am Nebenantriebsstrang eine Reversiereinheit angeordnet, durch die die Drehrichtung zumindest eines Teils des Nebenantriebsstrangs zumindest teilweise umkehrbar ist. Die weitere Überlastsicherung spricht insbesondere dann an, wenn es zu einem plötzlichen Anstieg des Drehmoments kommt, wie sie beispielsweise durch einen in das Ernteaggregat gelangten Fremdkörper ausgelöst werden kann. Um diesen Fremdkörper wieder aus dem Ernteaggregat zu entfernen, kann eine Reversiereinheit die Drehrichtung eines Teils des Antriebsstrangs umkehren. Hierdurch wird der Fremdkörper idealerweise wieder aus dem Ernteaggregat ausgetragen. Die Reversiereinheit kann hierbei durch einen manuell oder motorisch betätigbaren Hebel oder durch ein schaltbares Umkehrgetriebe nach Art eines Rückwärtsgangs ausgestaltet sein. Hierdurch wird ein Entfernen eines derartigen Fremdkörpers aus dem Ernteaggregat erleichtert und die Verfügbarkeit und Zuverlässigkeit der landwirtschaftlichen Erntemaschine erhöht. Besonders bevorzugt Ist die Reversiereinheit über einen hydraulisch betätigbaren Hebel oder ein aus der Ferne schaltbares Umkehrgetriebe oder dergleichen von einer Fahrerkabine fernsteuerbar ausgeführt. Somit kann die Umkehrung der Drehrichtung des Ernteaggregates von einer Bedienperson ausgelöst werden, ohne die Fahrerkabine zu verlassen. Die Stillstandszeit der Maschine wird somit reduziert und die Verfügbarkeit und Zuverlässigkeit der Maschine erhöht.

Weitere vorteilhafte Ausgestaltungen der Erfindung werden anhand der nachfolgend dargestellten Ausführungsbeispiele näher erläutert. Darin zeigen:
- Fig. 1: eine erfindungsgemäße landwirtschaftliche Erntemaschine,
- Fig. 2: einen Ausschnitt aus dem Nebenantriebsstrang mit einem Riementrieb der landwirtschaftlichen Erntemaschine nach Fig. 1,
- Fig. 3: einen Ausschnitt des Antriebsstranges, des Nebenantriebsstranges sowie des Ernteaggregats der landwirtschaftlichen Erntemaschine nach Fig. 1.

Nachfolgend werden gleichwirkende Elemente der Erfindung mit einer einheitlichen Bezugsziffer versehen. Die nachfolgend beschriebenen Merkmale der Ausführungsbeispiele können auch in anderen Merkmalskombinationen als dargestellt Gegenstand der Erfindung sein.

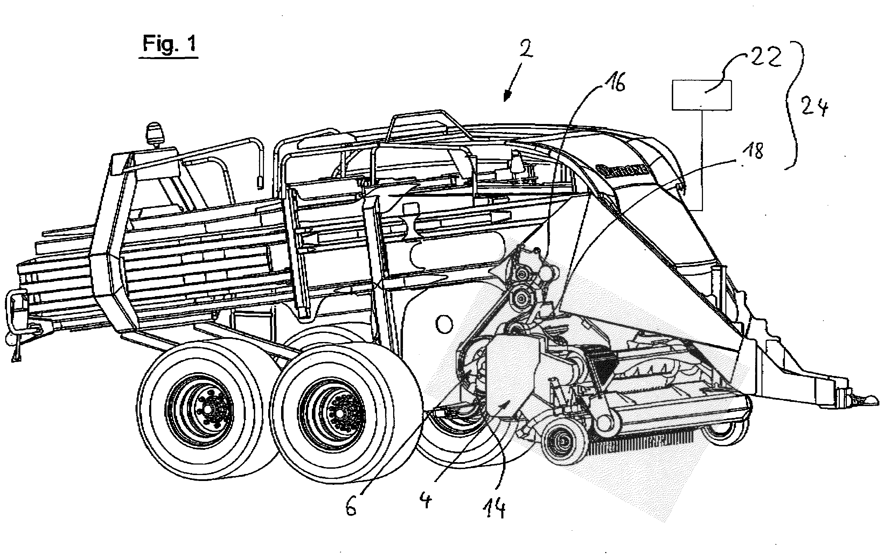

Fig. 1 zeigt eine erfindungsgemäße landwirtschaftliche Erntemaschine 2 mit einem Ernteaggregat 4, das über einen Nebenantriebsstrang 6 angetrieben wird. Der Nebenantriebsstrang 6 zweigt hier von einem Antriebsstrang 8 ab. Das Ernteaggregat 4 weist einen Förder- und Schneidrotor 5 auf, durch den das Erntegut gegen Messer in einem Messerblock gefördert wird. Der Nebenantriebsstrang 6 umfasst einen Riementrieb 10 mit einer Antriebsriemenscheibe 12 und einer Abtriebsriemenscheibe 14. Antriebsriemenscheibe 12 und Abtriebsriemenscheibe 14 sind über einen Riemen 16 miteinander verbunden. Der Riemen 16 wird über eine Spannvorrichtung 18, die hier als Spannrolle, die über einen Hydraulikzylinder 20 bewegbar Ist, ausgebildet Ist, gespannt. Weiterhin umfasst die landwirtschaftliche Erntemaschine 2 eine Steuerungseinrichtung 22 mit einer Vorrichtung zur Schlupferkennung. Spannvorrichtung 18 und Steuerungseinrichtung 22 bilden eine erste Überlastsicherung 24. Über die Steuerungseinrichtung 22 kann das Ernteaggregat 4 von Antriebsstrang 8 getrennt werden, in dem die Steuerungseinrichtung 22 den Hydraulikzylinder 20 derart ansteuert, dass die Spannvorrichtung 18 den Riemen 16 des Riementriebs 10 entspannt. Somit werden Antriebsriemenscheibe 12 und Abtriebsriemenscheibe 14 voneinander entkoppelt. Hierdurch wird ein Betrieb des Ernteaggregats 4 jenseits einer gewissen Belastungsgrenze verhindert, dem Anwender der landwirtschaftlichen Erntemaschine 2 eine deutliche Rückmeldung über eine Überlastung gegeben und die Lebensdauer und Verfügbarkeit der landwirtschaftlichen Erntemaschine 2 erhöht.

Weiterhin weist der Nebenantriebsstrang 6 eine weitere Überlastsicherung 26 auf. Diese kann an einer beliebigen Stelle des Nebenantriebsstrangs 6 angeordnet sein. Vorliegend ist diese in der Antriebsriemenscheibe 12 angeordnet und als Nockenschaltkupplung ausgestaltet. Durch die weitere Überlastsicherung 26 kann das Ernteaggregat 4 vom Antriebsstrang 8 getrennt werden, in dem die weitere Überlastsicherung 26 die Transmission im Nebenantriebsstrang 6 unterbricht. Hierdurch wird eine Überlastung der landwirtschaftlichen Erntemaschine 2 sowie daraus folgenden Schäden vermieden, wenn die Regelstrecke der ersten Überlastsicherung 24 mit der Spannvorrichtung 18 und der Steuerungseinrichtung 22 mit der Vorrichtung zur Schlupferkennung zu viel Zeit bis zur Unterbrechung der Transmission im Nebenantriebsstrang 6 benötigen würde, um Schäden an der landwirtschaftlichen Erntemaschine 2 zuverlässig zu vermeiden. Durch das Vorsehen einer weiteren Überlastsicherung 26 im Nebenantriebsstrang 6 kann somit die Lebensdauer und Verfügbarkeit der landwirtschaftlichen Erntemaschine 2 verbessert werden.

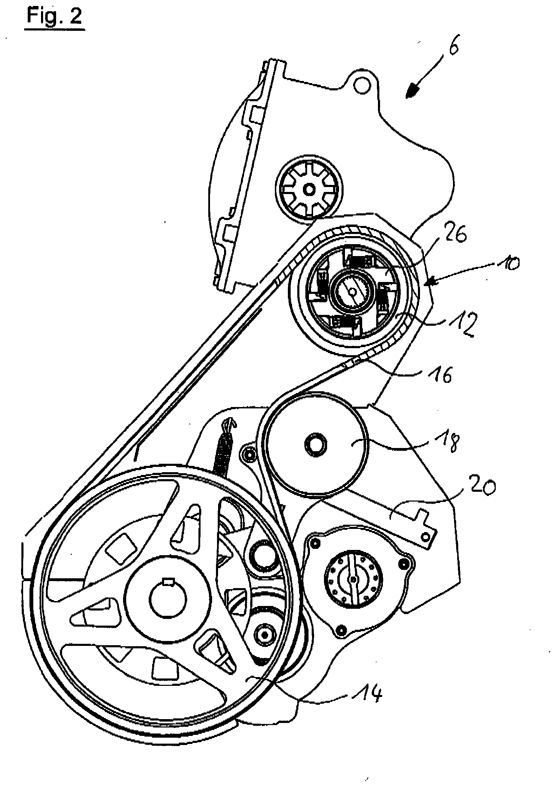

Fig. 2 zeigt den Nebenantriebsstrang 6. Dieser umfasst neben dem Riementrieb 10 weitere Getriebeanordnungen. In der Antriebsriemenscheibe 12 des Riementriebs 10 ist die weitere Überlastsicherung 26 in Form einer Nockenschaltkupplung angeordnet. Die Antriebsriemenscheibe 12 weist hierbei einen kleineren Durchmesser als die Abtriebsriemenscheibe 14 auf, so dass der Riementrieb 10 eine die Drehzahl untersetzende Übersetzung aufweist. Somit ist die weitere Überlastsicherung 26 an einer Stelle im Nebenantriebsstrang 6 angeordnet, an der vergleichsweise geringe Drehmomente herrschen. Die weitere Überlastsicherung 26 kann somit kleiner und leichter ausgeführt werden und ist geringeren Belastungen ausgesetzt. Hierdurch wird die Lebensdauer und Verfügbarkeit der weiteren Überlastsicherung 26 und somit der landwirtschaftlichen Erntemaschine 2 erhöht.

Auch die Ausgestaltung der welteren Überlastsicherung 26 als eine aus der Landmaschinentechnik als robust und zuverlässig bekannte Nockenschaltkupplung dient diesem Ziel. Die Verwendung einer Überlastsicherung 26 in Form einer Überlastkupplung ermöglicht zudem ein Wiedereinkuppeln nach Auftreten einer Überlast. Ein Austausch von Bautellen kann entfallen. Hierdurch werden mögliche Stillstandszeiten der landwirtschaftlichen Erntemaschine 2 reduziert und die Verfügbarkeit erhöht. Die Spannvorrichtung 18 ist hier als Rollenspannvorrichtung ausgestaltet, wobei die Spannrolle der Rollenspannvorrichtung über einen Hydraulikzylinder 20 bewegbar Ist.

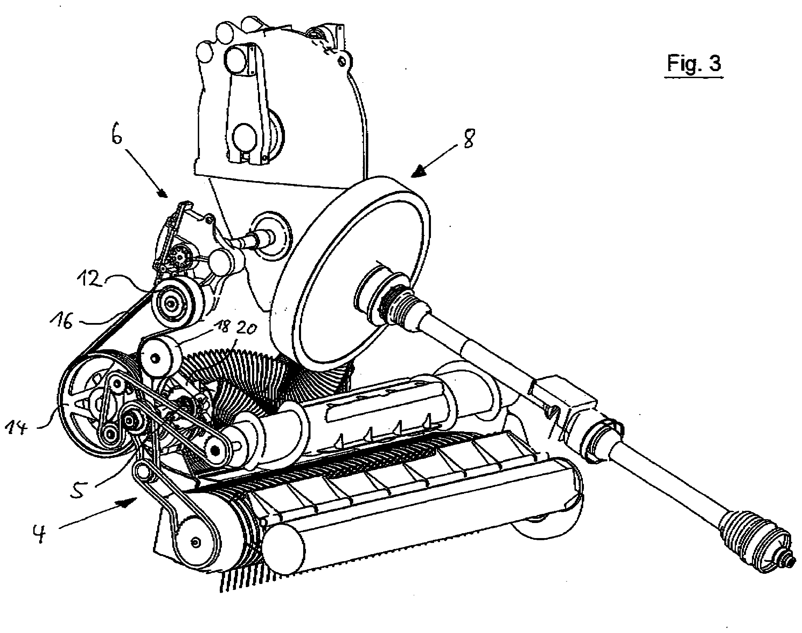

Fig. 3 zeigt einen Teil des Antriebsstrangs 8 sowie den vom Antriebsstrang 8 abweichenden Nebenantriebsstrang 6. Der Antriebsstrang 8 umfasst eine Zapfwelle, mit der er mit dem Zapfwellenantrieb eines landwirtschaftlichen Zugfahrzeuges verbunden werden kann. Weiterhin umfasst der Antriebsstrang 8 eine Schwungscheibe sowie ein Hauptgetriebe, mit der ein Presskolben der landwirtschaftlichen Erntemaschine 2, hier als Ballenpresse, angetrieben wird. Von dem Antriebsstrang 8 zweigt der Nebenantriebsstrang 6 ab. Der Nebenantriebsstrang 6 stellt dabei einen Antrieb für einen Förder- und Schneidrotor 5 sowie für eine Pick-up-Einrichtung und eine Zuführwalze bereit. Die weiteren Aggregate des Ernteaggregates 4 werden in dieser Ausführungsform über weitere Riemen- oder Kettentriebe angetrieben.

Die Erfindung ist hierbei nicht auf eine landwirtschaftliche Erntemaschine 2 in Form der im Ausführungsbeispiel dargestellten Quaderballenpresse beschränkt. Weitere erfindungsgemäße landwirtschaftliche Erntemaschinen 2 umfassen zum Beispiel Rundballenpressen, Ladewagen oder selbstfahrende Großflächenmäher, ohne dass die erfindungsgemäße landwirtschaftliche Erntemaschine 2 auf diese beispielhafte Aufzählung beschränkt wäre. Insbesondere bei selbstfahrenden landwirtschaftlichen Erntemaschinen 2, wie selbstfahrenden Großflächenmähern zweigen ein oder mehrere Nebenantriebsstränge 6 von einen Antriebsstrang 8 ab, der den Vortrieb der Erntemaschine 2, insbesondere den Antrieb des Fahrwerks der Erntemaschine 2, bewirkt. Hierbei kann die Erntemaschine 2 mehrere Ernteaggregate 4 aufweisen, von denen jedes über einen eigenen Nebenantriebsstrang 6 angetrieben wird. Es können Jedoch auch mehrere oder alle Ernteaggregate 4 zusammengefasst von einen Nebenantriebsstrang 6 angetrieben werden.

## Patentansprüche

1. Landwirtschaftliche Erntemaschine (2) mit einem Ernteaggregat (4) und mit einem von wenigstens einem Antriebsstrang (8) der Erntemaschine (2) abgezweigten und das Ernteaggregat (4) antreibenden Nebenantriebsstrang (6), wobei der Nebenantriebsstrang (6) einen Riementrieb (10) mit einer Antriebs- (12) und einer Abtriebsriemenscheibe (14) sowie mit einem Riemen (16) umfasst und der Riementrieb (10) mit einer Überlastsicherung (24) versehen ist, welche eine Spannvorrichtung (18) zum Spannen des Riemens (16) sowie eine die Spannvorrichtung (18) steuernde Steuerungseinrichtung (22) mit einer Vorrichtung zur Schlupferkennung aufweist, **dadurch gekennzeichnet,**
**dass** der Nebenantriebsstrang (6) eine weitere, das Ernteaggregat (4) bei Überschreitung eines vorgebbaren maximalen Drehmomentes vom Antriebsstrang (8) mechanisch trennende Überlastsicherung (26) aufweist, wobei die Steuerungseinrichtung (22) dazu eingerichtet ist, einen das Ernteaggregat (4) vom Antriebsstrang (8) trennenden Schaltvorgang der mechanisch trennenden weiteren Überlastsicherung (26) zu erkennen, wenn der von der Vorrichtung zur Schlupferkennung ermittelte Schlupf einen ersten vordefinierten Wert überschreitet.

2. Landwirtschaftliche Erntemaschine (2) nach Anspruch 1, **dadurch gekennzeichnet, dass** die Vorrichtung zur Schlupferkennung eine die Drehzahl der Antriebsriemenscheibe (12) ermittelnde Erfassungseinheit und eine die Drehzahl der Abtriebsriemenscheibe (14) ermittelnde Erfassungseinheit umfasst.

3. Landwirtschaftliche Erntemaschine (2) nach Anspruch 1 oder 2, **dadurch gekennzeichnet, dass** die Steuerungseinrichtung (22) dazu eingerichtet ist, einen das Ernteaggregat (4) vom Antriebsstrang (8) trennenden Schaltvorgang der Spannvorrichtung (18) auszulösen, wenn der von der Vorrichtung zur Schlupferkennung ermittelte Schlupf während einer vordefinierten Zeitspanne einen zweiten vordefinierten Wert überschreitet.

4. Landwirtschaftliche Erntemaschine (2) nach Anspruch 3, **dadurch gekennzeichnet, dass** der zweite vordefinierte Wert für den ermittelten Schlupf einem Wert entspricht, der bei einem übertragenen Drehmoment während einer vordefinierten Zeitspanne nicht schädigend auf den Antriebsstrang (8) und/oder den Nebenantriebsstrang (6) einwirkt.

5. Landwirtschaftliche Erntemaschine (2) nach Anspruch 3 oder 4, **dadurch gekennzeichnet, dass** der zweite vordefinierte Wert des Schlupfes des Riementriebs (10) bei einem übertragenen Drehmoment entsteht, das unterhalb des vorgebbaren maximalen Drehmomentes liegt.

6. Landwirtschaftliche Erntemaschine (2) nach einem der vorherigen Ansprüche, **dadurch gekennzeichnet, dass** der erste vordefinierte Wert für den ermittelten Schlupf einem Wert entspricht, der sich bei sofortiger Trennung der mechanisch trennenden weiteren Überlastsicherung (26) einstellt.

7. Landwirtschaftliche Erntemaschine (2) nach einem der vorhergehenden Ansprüche, **dadurch gekennzeichnet, dass** die Spannvorrichtung (18) über einen Hydraulikzylinder (20) betätigbar ist.

8. Landwirtschaftliche Erntemaschine (2) nach einem der vorhergehenden Ansprüche, **dadurch gekennzeichnet, dass** die weitere Überlastsicherung (26) als Überlastkupplung ausgestaltet ist.

9. Landwirtschaftliche Erntemaschine (2) nach Anspruch 8, **dadurch gekennzeichnet, dass** die Überlastkupplung als Nockenschaltkupplung ausgestaltet ist.

10. Landwirtschaftliche Erntemaschine (2) nach Anspruch 8 oder 9, **dadurch gekennzeichnet, dass** die Überlastkupplung nach einem Auslösen über den Riementrieb (10) wieder einkuppelbar ist.

11. Landwirtschaftliche Erntemaschine (2) nach einem der vorhergehenden Ansprüche, **dadurch gekennzeichnet, dass** der Nebenantriebsstrang (6) die Drehzahl vom Antriebsstrang (8) zum Ernteaggregat (4) verringernd ausgestaltet ist.

12. Landwirtschaftliche Erntemaschine (2) nach einem der vorhergehenden Ansprüche, **dadurch gekennzeichnet, dass** der Nebenantriebsstrang (6) eine die Drehzahl an der weiteren Überlastsicherung (26) erhöhende Getriebeanordnung umfasst.

13. Landwirtschaftliche Erntemaschine (2) nach einem der vorhergehenden Ansprüche, **dadurch gekennzeichnet, dass** das Ernteaggregat (4) einen Förder- und Schneidrotor (5) umfasst.

14. Landwirtschaftliche Erntemaschine (2) nach einem der vorhergehenden Ansprüche, **dadurch gekennzeichnet, dass** am Nebenantriebsstrang (6) eine Reversiereinheit angeordnet ist, durch die die Drehrichtung zumindest eines Teils des Nebenantriebsstranges (6) zumindest zeitweise umkehrbar ist.

## Claims

1. Agricultural harvesting machine (2) comprising a harvesting unit (4) and an auxiliary drive train (6) which is branched off from at least one drive train (8) of the harvesting machine (2) and drives the harvesting unit (4), the auxiliary drive train (6) comprising a belt drive (10) having a drive pulley (12) and a driven pulley (14) and having a belt (16), and the belt drive (10) being provided with an overload protection means (24) which has a tensioning device (18) for tensioning the belt (16) and a controller (22) which controls the tensioning device (18) and has a device for slip detection, **characterised in that** the auxiliary drive train (6) has a further overload protection means (26) which mechanically separates the harvesting unit (4) from the drive train (8) if a predeterminable maximum torque is exceeded, the controller (22) being designed to detect a switching process of the mechanically separating further overload protection means (26), which process separates the harvesting unit (4) from the drive train (8), if the slip determined by the device for slip detection exceeds a first predefined value.

2. Agricultural harvesting machine (2) according to claim 1, **characterised in that** the device for slip detection comprises a detection unit which determines the speed of the drive pulley (12) and a detection unit which determines the speed of the driven pulley (14).

3. Agricultural harvesting machine (2) according to either claim 1 or claim 2, **characterised in that** the controller (22) is designed to trigger a switching process of the tensioning device (18), which process separates the harvesting unit (4) from the drive train (8), if the slip determined by the device for slip detection exceeds a second predefined value during a predefined period of time.

4. Agricultural harvesting machine (2) according to claim 3, **characterised in that** the second predefined value for the determined slip corresponds to a value which, in the case of a transmitted torque, does not have a damaging effect on the drive train (8) and/or the auxiliary drive train (6) during a predefined period of time.

5. Agricultural harvesting machine (2) according to either claim 3 or claim 4, **characterised in that** the second predefined value of the slip of the belt drive (10) results in the case of a transmitted torque which is below the predeterminable maximum torque.

6. Agricultural harvesting machine (2) according to any of the preceding claims, **characterised in that** the first predefined value for the determined slip corresponds to a value which occurs in the case of an immediate separation by the mechanically separating further overload protection means (26).

7. Agricultural harvesting machine (2) according to any of the preceding claims, **characterised in that** the tensioning device (18) can be actuated by means of a hydraulic cylinder (20).

8. Agricultural harvesting machine (2) according to any of the preceding claims, **characterised in that** the further overload protection means (26) is designed as an overload clutch.

9. Agricultural harvesting machine (2) according to claim 8, **characterised in that** the overload clutch is designed as a cam clutch.

10. Agricultural harvesting machine (2) according to either claim 8 or claim 9, **characterised in that** the overload clutch can be re-engaged by means of the belt drive (10) after being triggered.

11. Agricultural harvesting machine (2) according to any of the preceding claims, **characterised in that** the auxiliary drive train (6) is designed to reduce the speed from the drive train (8) to the harvesting unit (4).

12. Agricultural harvesting machine (2) according to any of the preceding claims, **characterised in that** the auxiliary drive train (6) comprises a gear arrangement which increases the speed at the further overload protection means (26).

13. Agricultural harvesting machine (2) according to any of the preceding claims, **characterised in that** the harvesting unit (4) comprises a conveying and cutting rotor (5).

14. Agricultural harvesting machine (2) according to any of the preceding claims, **characterised in that** a reversing unit is arranged on the auxiliary drive train (6), by means of which the direction of rotation of at least part of the auxiliary drive train (6) can be reversed at least temporarily.

## Revendications

1. Moissonneuse agricole (2) comportant un module de moissonneuse (4) et une ligne de transmission auxiliaire (6) pour entraîner le module de moissonneuse (4) en dérivation d'au moins une ligne de transmission (8) de la moissonneuse (2),
- la ligne d'entraînement auxiliaire (6) comprenant une transmission à courroie (10) munie d'une poulie motrice (12) et une poulie entraînée (14) ainsi que d'une courroie (16), la transmission par courroie (10) étant munie d'une protection de surcharge (24) comportant un tendeur (18) pour tendre la courroie (16) ainsi qu'une installation de commande (22) pour commander le tendeur (18) avec un dispositif de détection de patinage,
**caractérisée en ce que**
la ligne de transmission auxiliaire (6) comporte une autre protection de surcharge (26) séparant mécaniquement le module de moissonneuse (4) par rapport à la transmission (8), en cas de dépassement d'un couple maximum prédéfini,
- l'installation de commande (22) étant conçue pour détecter une opération de commutation coupant le module de moissonneuse (4) par rapport à la transmission (8) par l'autre protection de surcharge (26), mécanique, si le patinage déterminé par le dispositif de détection de patinage dépasse une première valeur prédéfinie.

2. Moissonneuse agricole (2) selon la revendication 1,
**caractérisée en ce que**
le dispositif de détection du patinage comprend une unité de saisie déterminant la vitesse de rotation de la poulie motrice (12) et une unité de saisie déterminant la vitesse de rotation de la poulie entraînée (14).

3. Moissonneuse agricole (2) selon la revendication 1 ou 2, **caractérisée en ce que**
l'installation de commande (22) est conçue pour déclencher une opération de commutation du dispositif tendeur (18) séparant le module de moissonneuse (4) par rapport à la transmission (8) si le patinage détecté par le dispositif de détection de patinage dépasse une seconde valeur prédéfinie, pendant une durée prédéfinie.

4. Moissonneuse agricole (2) selon la revendication 3,
**caractérisée en ce que**
la seconde valeur prédéfinie du patinage correspond à une valeur qui pour le couple à transmettre pendant une durée prédéfinie, n'agit pas de manière destructrice sur la transmission (8) et/ou la transmission auxiliaire (6).

5. Moissonneuse agricole (2) selon la revendication 3 ou 4, **caractérisée en ce que**
la seconde valeur prédéfinie du patinage de l'entraînement à courroie (10) se développe pour un couple transmis inférieur au couple maximum prédéfini.

6. Moissonneuse agricole (2) selon l'une des revendications précédentes,
**caractérisée en ce que**
la première valeur prédéfinie du couple déterminé correspond à une valeur qui s'établit lors de la séparation immédiate de l'autre protection de surcharge (26) de séparation mécanique.

7. Moissonneuse agricole (2) selon l'une des revendications précédentes,
**caractérisée en ce que**
le dispositif tendeur (18) est actionné par un vérin hydraulique (20).

8. Moissonneuse agricole (2) selon l'une des revendications précédentes,
**caractérisée en ce que**
l'autre protection de surcharge (26) est conçue comme embrayage à surcharge.

9. Moissonneuse agricole (2) selon la revendication 8,
**caractérisée en ce que**
l'embrayage à surcharge est un limiteur de couple à came.

10. Moissonneuse agricole (2) selon la revendication 8 ou 9, **caractérisée en ce que**
après un déclenchement l'embrayage à surcharge peut de nouveau être embrayé par la transmission à courroie (10).

11. Moissonneuse agricole (2) selon l'une des revendications précédentes,
**caractérisée en ce que**
la transmission auxiliaire (6) est conçue pour réduire la vitesse de rotation de la transmission (8) vers le module de moissonneuse (4).

12. Moissonneuse agricole (2) selon l'une des revendications précédentes,
**caractérisée en ce que**
la transmission auxiliaire (6) comporte un dispositif de transmission qui élève la vitesse de rotation de l'autre protection de surcharge (26).

13. Moissonneuse agricole (2) selon l'une des revendications précédentes,
**caractérisée en ce que**
le module de moissonneuse (4) comprend un rotor de transfert et de coupe (5).

14. Moissonneuse agricole (2) selon l'une des revendications précédentes,
**caractérisée en ce que**
la transmission auxiliaire (6) comporte un inverseur qui inverse au moins de temps en temps le sens de rotation d'au moins une partie de la transmission auxiliaire (6).
